# EUROPÄISCHE PATENTSCHRIFT

(11) **EP 1 433 372 B1**
(45) Veröffentlichungstag und Bekanntmachung des Hinweises auf die Patenterteilung: **18.07.2007**
(21) Anmeldenummer: 03025218.3
(22) Anmeldetag: 05.11.2003
(51) Int. Cl.: A01D 78/10

(54) **Kreiselschwader**
Rotary windrower
Andaineuse rotative

(30) Priorität: 13.12.2002 DE 10258661
(43) Veröffentlichungstag der Anmeldung: 30.06.2004
(60) Teilanmeldung: 06003554.0
(73) Patentinhaber: CLAAS Saulgau GmbH, 88348 Bad Saulgau (DE)
(72) Erfinder: Geng, Manfred, 88348 Bad Saulgau (DE)
(74) Vertreter: Roth, Klaus

(56) Entgegenhaltungen:
- EP-A- 0 485 698
- EP-A- 0 517 632
- EP-A- 0 819 372
- DE-U- 29 521 619
- DE-U- 29 818 457
- FR-A- 2 348 645
- FR-A- 2 763 208

## Beschreibung

Die Erfindung betrifft einen Kreiselschwader gemäß dem Oberbegriff des unabhängigen Anspruchs 1.

Der wachsende Wettbewerbsdruck auf dem Agrarsektor der Grünfutterernte verlangt ständig nach leistungsfähigeren Maschinen mit größeren Arbeitsbreiten.

In der EP 0 819 372 ist ein Kreiselschwader mit vier Schwadkreiseln beschrieben, der in dem CLAAS - Prospekt "Schwader LINER, Ausgabe 8/01 (DC) 200/248 522.0 abgebildet und beschrieben ist. Ein derartiger Schwader mit vier Schwadkreiseln ist unter der Handelsbezeichnung LINER 3000 abgebildet und beschrieben. Die erreichbare Arbeitsbreite von Vier-Kreiselschwadem dieser Bauart liegt derzeit bei etwa 15 Meter.

Weiterhin ist aus der Patentschrift DE 199 16 759 B4 ein Kreiselschwader bekannt, worin vier V-förmig angeordnete Rechräder abgebildet sind. Hierbei sind zwei Rechräder um eine vertikale Drehachse verschwenkbar. Mittels einer Verschwenkung um 180° der als rechbar ausgebildeten Rechräder wird eine Umkehrung der Umlaufrichtung erreicht. Dies wird dazu verwendet, dass unterschiedlicihste Schwade gebildet werden können. Um das Verschwenken des Rechpaares um die vertikale Drehachse zu ermöglichen, wird der Maschinenrahmen und/oder das Fahrgestell teleskopierbar ausgebildet.

Zusätzlich zu den verschwenkbaren Rechrädern können mindestens ein weiteres Rechrad, bevorzugt ein Paar oder mehrere Paare aus gegenläufigen Rechrädern, welche ebenfalls verschwenkbar oder auch teleskopierbar ausgebildet sein können, vorgesehen werden, wobei die Rechräder zum Beispiel V-förmig hintereinander gestaltet sein können.

Nachteilig bei einem derartigen Kreiselschwader mit verschwenkbaren Rechrädern ist der zwangsweise notwendige konstruktive große Aufwand, der vor allem dadurch noch vergrößert wird, dass sowohl der Maschinenrahmen als auch das Fahrgestell teleskopierbar realisiert werden müssen.

Darüber hinaus ist dieser Kreiselschwader für einen selbstfahrenden Kreiselschwader aufgrund des zwangsweise notwendigen, teleskopierbaren Maschinenrahmens und/oder Fahrgestelles und des hiermit erreichbaren Freiraums für das Verschwenken der Rechräder im Grunde nicht geeignet.

Zudem ist ein derartiger Kreiselschwader in der Ausführung mit sechs Rechrädern sowohl während der Straßenfahrt als auch während der Arbeit auf dem Feld äußerst schlecht zu manövrieren.

Die Aufgabe der Erfindung ist es, einen Kreiselschwader mit großer Arbeitsbreite zu schaffen, der eine Lenkbarkeit bietet, die eine besonders dynamisch ausgeprägte Beweglichkeit des Kreiselschwaders auf engem Raum in schwierigen Verhältnissen ermöglicht.

Gelöst wird die Aufgabe der Erfindung mit den Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht dabei einen Kreiselschwader mit gestaffelt angeordneten Schwadkreiseln derart vor, dass der Kreiselschwader aus wenigstens drei Staffelreihenbildenden Schwadkreiseln gebildet wird und wobei zwischen der in Fahrtrichtung betrachteten zweiten und dritten Staffelreihe wenigstens ein Fahrwerk angeordnet ist.

Vorzugsweise verfügen wenigstens die Staffelreihen vor dem Fahrwerk über längenveränderbare Ausleger. In einer weiteren Ausgestaltung der Erfindung verfügen die Ausleger sämtlicher Staffelreihen über längenveränderbare Ausleger. Dabei sind die längenveränderbaren Ausleger vorzugsweise als teleskopierbare Ausleger ausgestaltet, deren Stellantriebe zum Ein- bzw. Ausfahren vorzugsweise in an sich bekannter Weise von Hydraulikzylindern gebildet werden.

Dabei sind die Ausleger an ein Fahrgestell in Klappgelenken angelenkt und sie können dabei um die in Fahrtrichtung weisenden Gelenkachsen von der Arbeitsstellung in ihre Transportstellung in ebenfalls bekannter Weise von Hydraulikzylindern als Stellantriebe hochgeklappt werden. Am freien äußeren Ende der Ausleger sind die eigentlichen Schwadkreisel angelenkt, die sich in ihrer Arbeitsstellung gegenüber dem Boden auf eigenen Fahrwerken abstützen. Die Anlenkung der Schwadkreisel ist so ausgestaltet, das diese sich in bekannter Weise während ihrer Vorwärtsbewegung dem Bodenprofil anpassen können.

Der erfindungsgemäße Kreiselschwader erzeugt Arbeitsbreiten, die sich weit über dass Maß des Bekannten erstrecken. Beispielsweise lassen sich mit sechs Schwadkreiseln Arbeitsbreiten bis zu 22 Metern erreichen. Dieses verlangt nach Auslegern, die einen entsprechenden Abstand der Schwadkreisel gegenüber dem Maschinengestell überbrücken und die andererseits in der Lage sind, die Schwadkreisel in eine Transportposition zu verbringen, die etwa eine Breite von 3 Metern und etwa eine Höhe von 4 Metern nicht überschreitet.

Der Antrieb der Schwadkreisel erfolgt vorzugsweise über einen zapfwellengetriebene Antriebsstränge, die sich aus verschieden Gelenkwellen und Verzweigungsgetrieben zusammensetzen. Aber auch hydraulische Antriebe, gebildet aus Hydraulikmotoren, die direkt an den Schwadkreiseln angeblockt sind, sind möglich.

Besonders vorteilhaft sind in den Kreuzungspunkten der Antriebsstränge schaltbare Winkelgetriebe angebracht, deren in Richtung der Schwadkreisel sich erstreckenden Abtriebsstränge vom Hauptantriebsstrang durch schaltbare Kupplungen zu oder abgeschaltet werden können und auch in ihrer Drehrichtung umgeschaltet werden können. Dieses ermöglicht einen besonders flexiblen Einsatz eines Großschwaders nach der Erfindung. Beispielsweise können dadurch allein durch die Variation der Drehrichtungszuordnungen der Schwadkreisel unterschiedliche Schwadablagen erzeugt werden. Dadurch können wahlweise entweder ein Großschwad in der Hauptmittelebene oder drei Einzelschwade beabstandet zueinander symmetrisch zur Hauptmitteleben erzeugt werden. Durch individuelle Ansteuerung der Länge jedes einzelnen Auslegers der Staffelreihen können dabei die optimalen Abstände der Schwadkreisel zueinander eingestellt werden. Durch die hydraulischen Stellantriebe kann dieser Verstellvorgang aus der Fahrerkabine auch während der Fahrt vorgenommen werden.

Bei dicken Futterbeständen, beispielsweise im ersten Schnitt der Erntesaison kann es sinnvoller sein, beispielsweise zur Schonung der Antriebsstränge der Schwadkreisel oder wegen der nachfolgenden Arbeitsgänge, mehrere Einzelschwade zu bilden, während es bei nachfolgenden Schnitten sinnvoller sein kann, einen Mittelschwad als Großschwad zu bilden.

Auch kann es Arbeitsbedingungen geben, wo es sinnvoller ist, die Arbeitsbreite drastisch zu reduzieren. In derartigen Fällen ist es auch möglich, die komplette Hälfte des Großschwaders außer Funktion zu setzen, indem die Schwadkreisel der linken oder rechten Hälfte der Maschine hochgeklappt werden und eben die Antriebsstränge der hochgeklappten Schwadkreisel vom Hauptantriebstrang mittels der schaltbaren Kupplungen abgekoppelt werden. Dabei kann beispielsweise auch eine reine Seitenschwadablage durch Übergabe des Futters von Schwadkreisel zu Schwadkreisel erzeugt werden.

Wegen der großen Arbeitsbreite kann es besonders sinnvoll sein, den Großschwader mit einer Bestandskantenführung, welches auch gleichermaßen als Hinderniserkennungssystem genutzt werden kann, auszustatten. Dieses erhöht insbesondere die Betriebssicherheit in der Umgebung von Einzäunungen oder beim Passieren von Hindernissen wie Strommasten oder Bäumen. Zur besseren Manövrierfähigkeit des Großschwaders ist es sinnvoll, diesen mit gelenkten Rädern auszustatten.
Ebenfalls kann ein Großschwader nach der Erfindung auch als selbstfahrender Schwader ausgebildet sein. Beispielsweise kann der selbstfahrende Schwader über einen Triebkopf verfügen, der sich auf einer lenkbaren Vorderachse abstützt und der ebenfalls über eine lenkbare Hinterachse verfügt.

Nähere Einzelheiten der Erfindung sind den nachfolgenden Figurendarstellungen und deren Beschreibungen zu entnehmen.

Es zeigen:
- Fig. 1: zeigt ein Ausführungsbeispiel der Erfindung dargestellt am Beispiel eines gezogenen Kreiselschwaders in einer Draufsicht in Arbeitsstellung
- Fig. 2: zeigt ein anderes Ausführungsbeispiel der Erfindung dargestellt am Beispiel eines selbstfahrenden Kreiselschwaders in einer Draufsicht in Arbeitsstellung anlog Fig. 1
- Fig. 2a: zeigt ein anderes Ausführungsbeispiel der Erfindung dargestellt am Beispiel eines selbstfahrenden Kreiselschwaders mit gelenkig angekoppeltem Triebkopf in einer Draufsicht in Arbeitsstellung anlog Fig. 2
- Fig. 2b: zeigt den Kreiselschwaders nach der Erfindung in einer Manövriersituation in Rückwärtsfahrt anlog Fig. 2a
- Fig.3: zeigt ein Anwendungsbeispiel nach der Erfindung anlog eines Kreiselschwaders gemäß der Fig. 1, Fig. 2, Fig. 2a und Fig. 2b hinsichtlich einer alternativen Schwadbildung und Schwadablage
- Fig. 4: zeigt eine vereinfachte und freigelegte Darstellung der Antriebsstränge zum Antrieb der Schwadkreisel gemäß der Fig. 1, Fig. 2, Fig. 2a und Fig. 2b
- Fig. 4a: zeigt einen vergrößerten Ausschnitt aus der Darstellung der Fig. 4
- Fig. 4b: zeigt eine Verzweigung der Antriebsstränge zwischen Hauptantriebsstrang und den mittleren Antriebssträngen zu den Schwadkreiseln mit schaltbaren Kupplungen zum antriebsmäßigen An- oder Abkoppeln der Schwadkreisel
- Fig. 4c: zeigt eine erweiterte Ausführung des Schaltgetriebes analog Fig. 4b
- Fig. 4d: zeigt das Schaltgetriebes analog Fig. 4c in einem umgekehrten Beschaltungszustand mit Drehrichtungsumkehr der Schwadkreisel
- Fig. 5: zeigt eine weitere alternative Einsatzmöglichkeit der Erfindung eines Kreiselschwaders nach der Erfindung eingesetzt als Seitenschwader durch einseitiges Hochklappen der Schwadkreisel
- Fig. 6: zeigt eine weitere alternative Einsatzmöglichkeit der Erfindung eines Kreiselschwaders nach der Erfindung eingesetzt als Mittelschwader durch das Hochklappen der mittleren Schwadkreisel
- Fig. 7: zeigt eine weitere alternative Einsatzmöglichkeit der Erfindung eines Kreiselschwaders nach der Erfindung eingesetzt als Mittelschwader durch das Hochklappen der mittleren Schwadkreisel
- Fig. 8: zeigt eine weitere alternative Einsatzmöglichkeit der Erfindung eines Kreiselschwaders nach der Erfindung eingesetzt als Mittelschwader durch das Hochklappen der vorderen Schwadkreisel
- Fig. 9: zeigt eine Prinzipdarstellung eines Kreiselschwaders gemäß der Erfindung mit einem Hinderniserkennungssystem
- Fig. 10: zeigt einen Kreiselschwader nach der Erfindung in Transportstellung mit hochgeklappten Schwadkreiseln.

### Bezugszeichenliste

- 1: Kreiselschwader
- 2,2': Schwadkreisel
- 3,3': Schwadkreisel
- 4,4': Schwadkreisel
- 5: Fahrgestell
- 6: Kupplungseinrichtung
- 7: Traktor
- 8: Fahrwerk
- 9: Laufräder
- 10: erste Staffelreihe
- 11: zweite Staffelreihe
- 12: dritte Staffelreihe
- 13,13': vorderer Ausleger
- 14,14': mittlerer Ausleger
- 15,15': hinterer Ausleger
- 16: Hauptantriebsstrang
- 17,17': vorderer Antriebsstrang
- 18,18': mittlerer Antriebsstrang
- 19,19': hinterer Antriebsstrang
- 20: vorderes Winkelgetriebe
- 21: mittleres Winkelgetriebe
- 22: hinteres Winkelgetriebe
- 23,23': Drehrichtung
- 24: Großschwad
- 25: Einzelschwad
- 26,26': Übergabeschwad
- 27,27': Übergabeschwad
- 28: Arbeitsbreite
- 29: Arbeitsbreite
- 30: Klappgelenk
- 31: Gelenkachse
- 32:
- 33: Zuggelenk
- 34: Hochachse
- 35: deichselbildender Längsträger
- 36: Längsmittelebene
- 37: Triebkopf
- 38: Vorderachse
- 39: Antriebsrad
- 40,44': Abstand
- 41: Schwadbreite
- 42: Kreiselabstand
- 43,43': Kreiselabstand
- 44,44': Kreiselabstand
- 45: Zapfwelle
- 46,46',46": Gelenkwelle
- 47,47': Gelenkwelle
- 48,48': Kupplung
- 49,49': Kegelrad
- 50,50': Kegelrad
- 51: Durchtriebswelle
- 52,52': Abtriebswelle
- 53: Drehrichtung
- 54,54': Drehrichtung
- 55: Getriebegehäuse
- 56: Kardangelenk
- 57: Kardangelenk
- 58: Breitschwad
- 59,59': Kupplung
- 60,60: Hinderniserkennung

- F: Fahrtrichtung

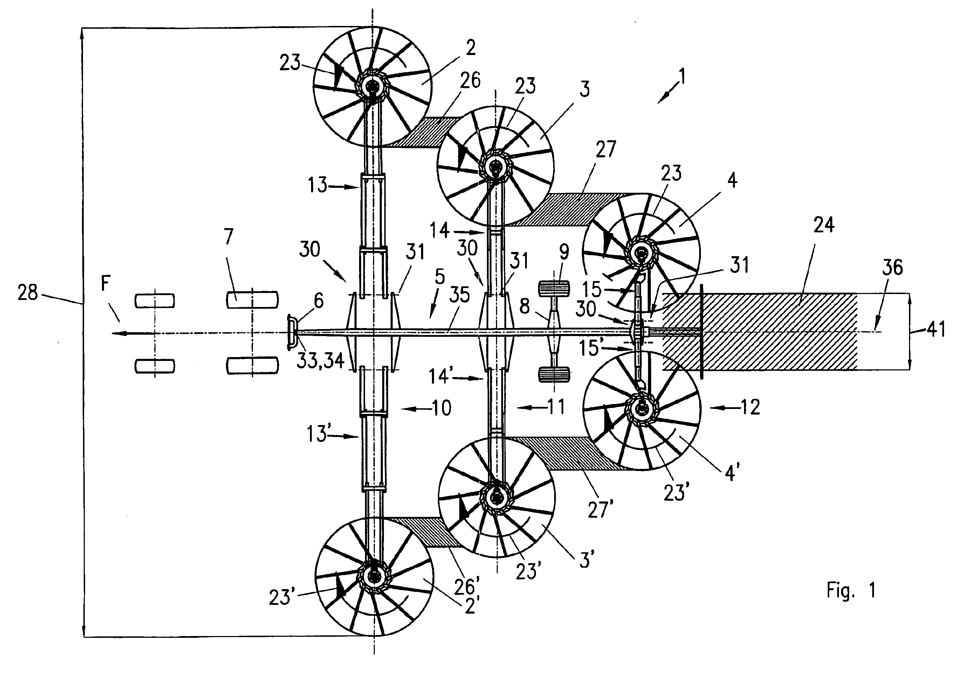

Fig. 1 zeigt ein Ausführungsbeispiel der Erfindung am Beispiel eines gezogenen Großschwaders als Kreiselschwader 1 mit sechs am Boden über Laufräder abgestützten Schwadkreiseln 2,2',3,3',4,4' in einer Draufsicht in Arbeitsstellung im ausgeklappten Zustand der Schwadkreisel 2,2',3,3',4,4' und somit im gestreckten Zustand der Ausleger ,13,13',14,14',15,15'. Jeweils zwei gegenüberliegende Schwadkreisel 2,2'; 3,3'; 4,4' bilden als Paar gemeinsam mit den ihnen zugehörigen Auslegern 13,13',14,14',15,15' eine in Fahrtrichtung gestaffelte Reihe von Schwadkreiseln, nachfolgend als Staffelreihen 10,11,12 bezeichnet.

Die Ausleger 13,13',14,14',15,15'. der Schwadkreisel 2,2',3,3',4,4' sind an einem deichselbildenden Längsträger 35 als Teil des Fahrgestells 5 in Klappgelenken 30, hochklappbar um etwa 90° um deren Gelenkachsen 31, angelenkt. Die vorderen Ausleger 13,13' sind dabei als zweifach, die mittleren Ausleger 14,14' und die hinteren Ausleger 15,15' als einfach teleskopierbare längenveränderbare Ausleger ausgebildet.

Das Fahrgestell 5 ist mittels einer Kupplungseinrichtung 6 mit dem Traktor 7 in den Unterlenkern als Zugeinrichtung verbunden. Der deichselbildende Längsträger 35 wiederum ist in dem Zuggelenk 33 um eine Hochachse 34 verschwenkbar und frei nachlaufend mit der Kupplungseinrichtung 6 verbunden.

Das Fahrgestell 5 wird von einem Fahrwerk 8 mit den Laufrädern 9 gegenüber dem Boden abgestützt. Die Laufräder 9 sind vorzugsweise mit einer Lenkeinrichtung in an sich bekannter Weise ausgestattet, die den Lenkeinschlag der Laufräder in Abhängigkeit vom Einschlagwinkel zwischen der Kupplungseinrichtung 6 und dem deichselbildenden Längsträger 35 steuert. Dieses verbessert das Nachlaufverhalten hinsichtlich der Spurtreue gegenüber dem Traktor und erhöht die Wendigkeit hinsichtlich der Manövrierfähigkeit.

Die Ausleger 13,13', 14,14' der Schwadkreisel 2,2',3,3' sind erfindungsgemäß vor dem Fahrwerk 8 des Fahrgestells 5 und die Schwadkreisel 4,4' hinter dem Fahrwerk 8 angeordnet. Dabei ergibt sich eine gestaffelte Anordnung der Schwadkreisel 2,2';3,3';4,4', die eine in Fahrtrichtung F offene V-förmige Anordnung darstellt. In dieser gestaffelten Anordnung bilden zwei sich gegenüberliegende Schwadkreisel 2,2'; 3,3'; 4,4' jeweils eine Staffelreihe 10,11,12, wobei diese die V-förmig angeordneten Schwadkreisel 2,2',3,3',4,4' etwa spiegelbildlich um die vertikale Längsmittelebene 36 des Kreiselschwaders 1 verteilt sind.

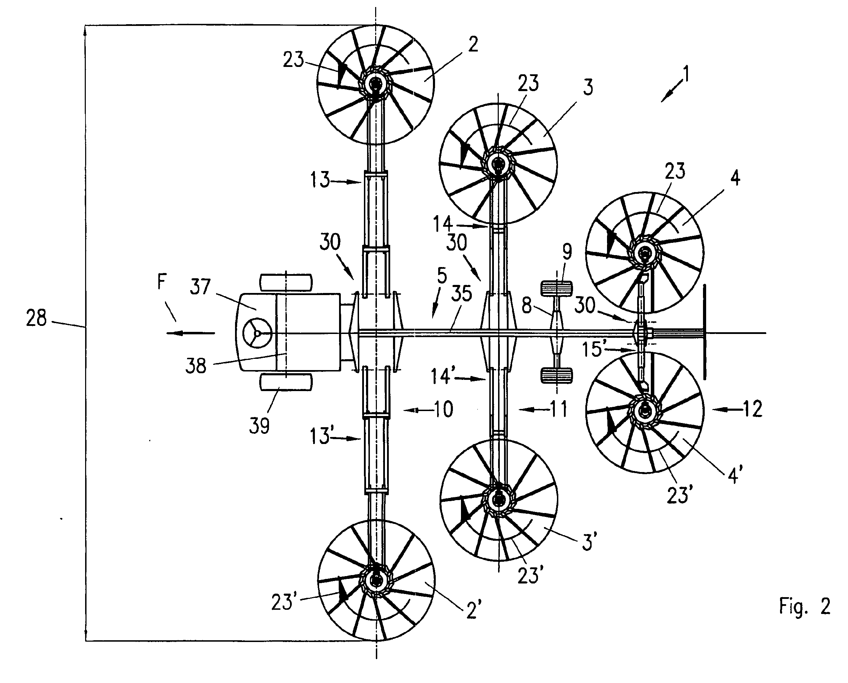

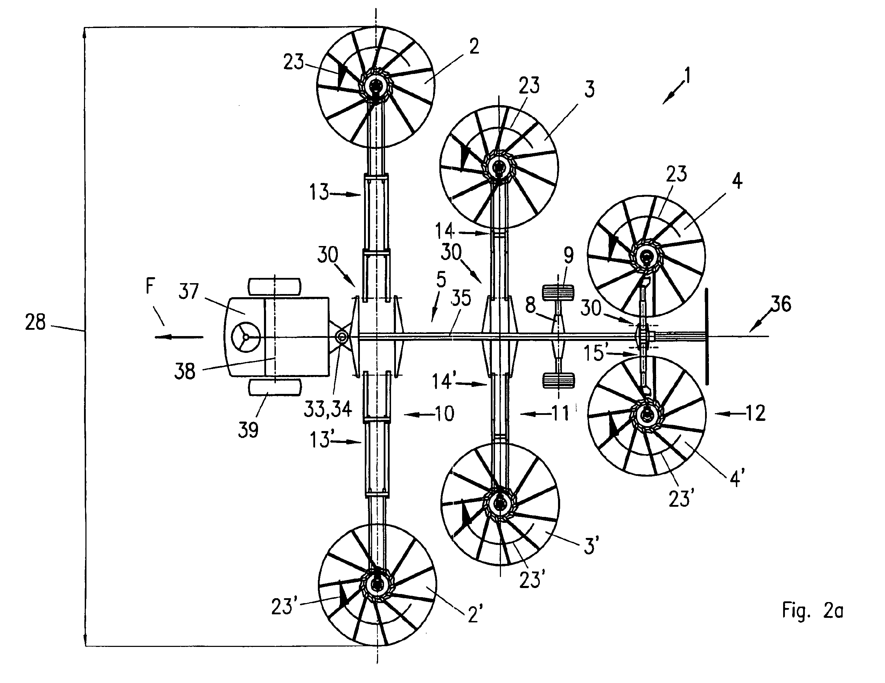

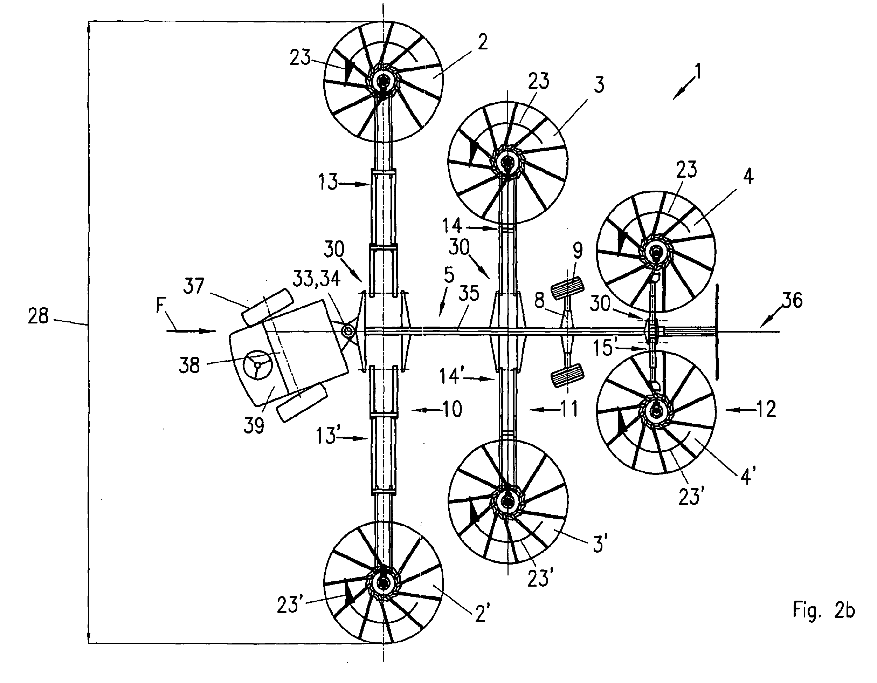

Fig. 2 zeigt ein Ausführungsbeispiel der Erfindung dargestellt am Beispiel eines selbstfahrenden Kreiselschwaders 1 in einer Draufsicht in Arbeitsstellung analog Fig. 1. Dabei ist der Kreiselschwader 1 mit einem Triebkopf 37, der auf einer angetriebenen Vorderachse 38 mit dessen lenkbaren Antriebsrädern 39 gegenüber dem Boden abgestützt ist, verbunden. Der Triebkopf 37 kann sowohl starr als auch gelenkig mit dem Fahrgestell 5 des Kreiselschwaders 1 verbunden sein. Fig. 2 zeigt ein Ausführungsbeispiel für eine starre Kopplung.
Fig. 2a zeigt ein Ausführungsbeispiel für eine gelenkige Kopplung zwischen dem Triebkopf 37 und dem deichselbildenden Längsholm 35 des Fahrgestells 5. Sowohl in der Ausführung der starren Kopplung als auch in der Ausführung der gelenkigen Kopplung zwischen Fahrgestell 5 und Triebkopf 37 können die Vorderräder 39 und die Laufräder der Hinterräder 9 abhängig oder unabhängig voneinander lenkbar sein.

Fig. 2b zeigt eine Fahrsituation eines Kreiselschwaders 1 gemäß Fig. 2a in einem Wendemanöver in einer Rückwärtsfahrt mit unabhängig voneinander lenkbarer Vorderachse 38 und Hinterachse des Fahrwerks 8 in Zusammenhang mit der Knicklenkung um die Hochachse 34 des Zuggelenks 33. Diese Ausgestaltung ist anlog übertragbar in seiner Anwendung auf die Gespannsituation zwischen Traktor 7 und Kreiselschwader 1 gemäß Fig. 1.

Diese erfinderische Ausgestaltung der Lenkbarkeit bietet eine besonders dynamisch ausgeprägte Beweglichkeit des Kreiselschwaders 1 auf engem Raum in schwierigen Verhältnissen.

In Fig. 1 sind die Drehrichtungen 23,23' der Schwadkreisel 2,2',3,3',4,4' durch Drehrichtungspfeile gekennzeichnet. Die dargestellte Situation der Drehrichtungszuordnungen ermöglicht die Bildung eines Großschwads 24 über die Arbeitsbreite 28 hinweg als Mittenablage im Bereich der Längsmittelebene 36. Erreicht wird diese durch die V-förmig gestaffelte Anordnung der Staffelreihen 10,11,12 mit den Schwadkreiseln 2,2',3,3',4,4' wobei die Schwadkreisel 2,3,4 bzw. 2',3',4' untereinander einen Übergabeschwad 26,27 bzw. 26',27' erzeugen, die beidseitig der Längsmittelebene 36 dort zu einem Großschwad 24 zusammengelegt werden.

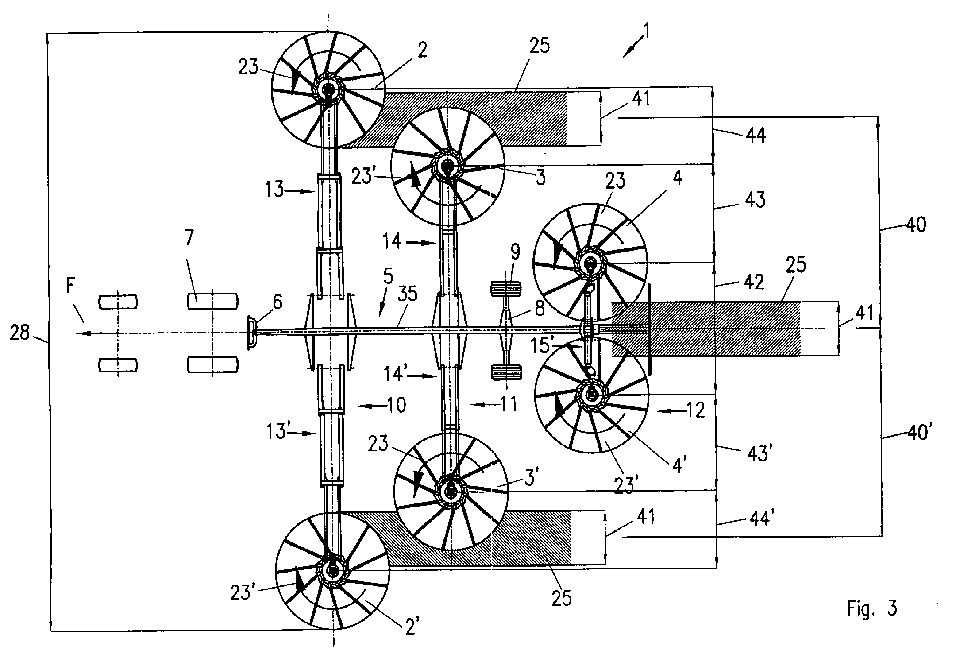

In Fig. 3 ist ein Ausführungsbeispiel eines Kreiselschwaders 1 gemäß Fig. 1 jedoch mit einer anderen Drehrichtungszuordnung der Schwadkreisel 2,2',3,3',4,4' untereinander dargestellt. Dabei sind die Drehrichtungen 23,23' der Schwadkreisel 3,3' der Staffelreihe 11 gegenüber der Ausführung gemäß Fig. 1 umgekehrt d.h. entgegengesetzt. Diese ermöglicht eine andere Form der Schwadbildung und Schwadablage. So werden in diesem Ausführungsbeispiel drei Einzelschwaden 25 gebildet und in Abstand 40,40' zueinander abgelegt. Dabei arbeiten die Schwadkreisel 2,3; 2',3'; und 4,4' paarweise einander zu und erzeugen so jeweils einen Einzelschwad 25. Damit die Abstände 40,40' der Einzelschwade 25 untereinander gleich sind und auch die Schwadbreiten 41 und deren Futtermassen untereinander möglichst gleich sind, ist es ein erfinderischer Vorteil, dass die Kreiselabstände 42,43,43',44,44' unabhängig voneinander aufeinander abgestimmt und eingestellt werden können. Dieses ermöglicht die voneinander unabhängige Längenveränderbarkeit aller Ausleger 13,13'14,14'15,15'.

Damit kann auch gleichermaßen die Gesamtarbeitsbreite 28 variiert werden, d.h. dem Futterbestand oder den räumlichen Verhältnissen angepasst werden. Dieses kann vorzugsweise durch die Ausgestaltung der Ausleger 13,13'14,14'15,15' als teleskopierbare und damit längenveränderbare Ausleger erzeugt werden. Die Stellelemente der Teleskopie sind aus Gründen der Übersichtlichkeit nicht dargestellt. Derartige Stellantriebe können beispielsweise durch Hydraulikzylinder mit Differentialkolben gebildet werden.

In besonders vorteilhafter Weise können diese Hydraulikzylinder mit Wegaufnehmern als Längenmeßsystem ausgebildet sein. Der momentane Istzustand, d.h. die momentane Lage des Kolbens und damit die momentane Position des Schwadkreisels kann damit erfasst und beispielsweise auf einem Terminal visualisiert dargestellt werden. Beim Einsatz eines Mikroprozessors beispielsweise in Verbindung mit einem BUS-System (LBS oder ISO-BUS), kann der Bedienungskomfort und die Bedienungssicherheit erheblich gesteigert werden, indem sämtliche Stellvorgänge vom Fahrerplatz per Tastendruck durchgeführt werden können und dabei gleichzeitig auf besonders einfache Art und Weise Plausibilitätskontrollen durchgeführt werden können, die Fehlbedienungen verhindern können. Dieses senkt das Unfallrisiko und das Risiko der Schadensverursachung an der maschinellen Einrichtung.

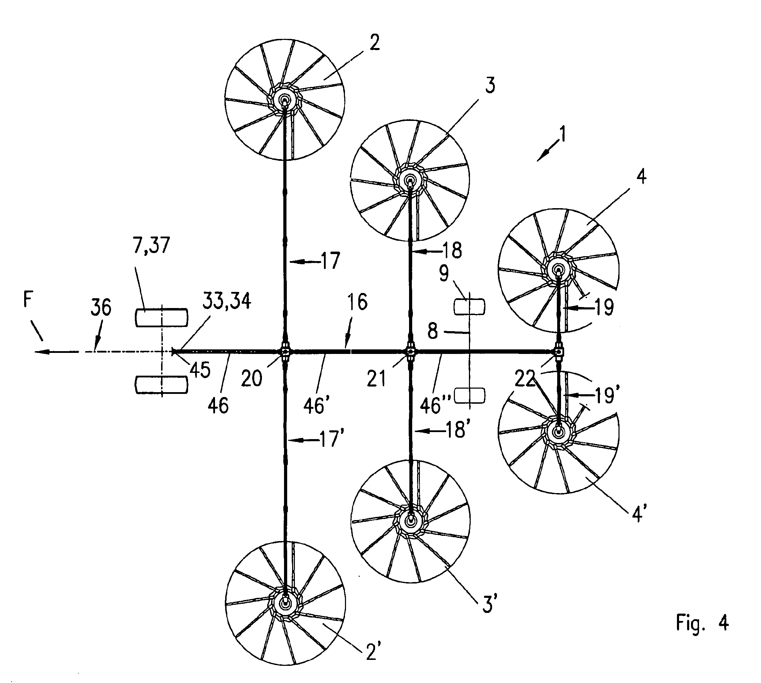

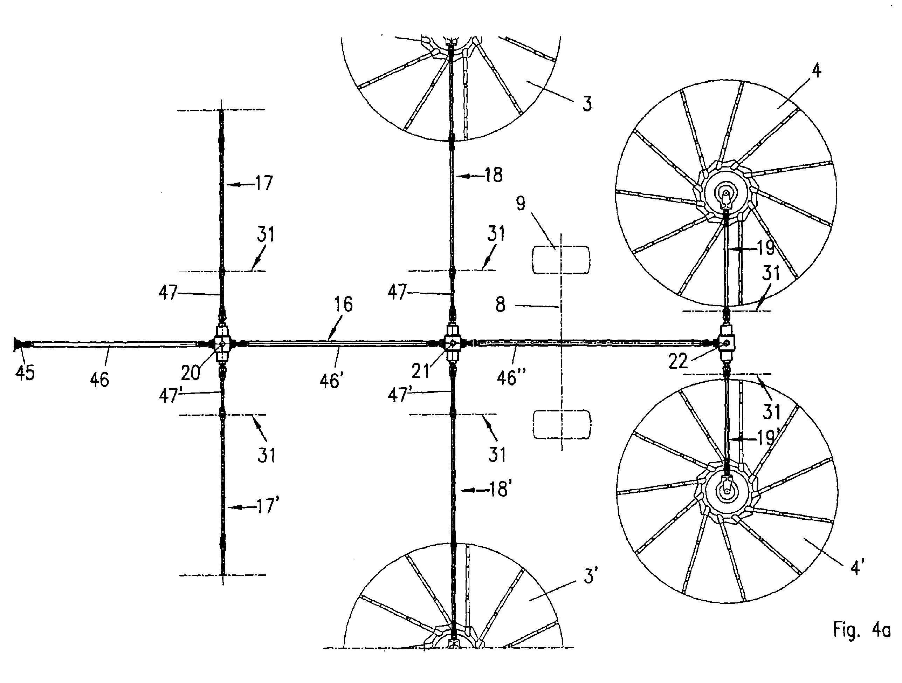

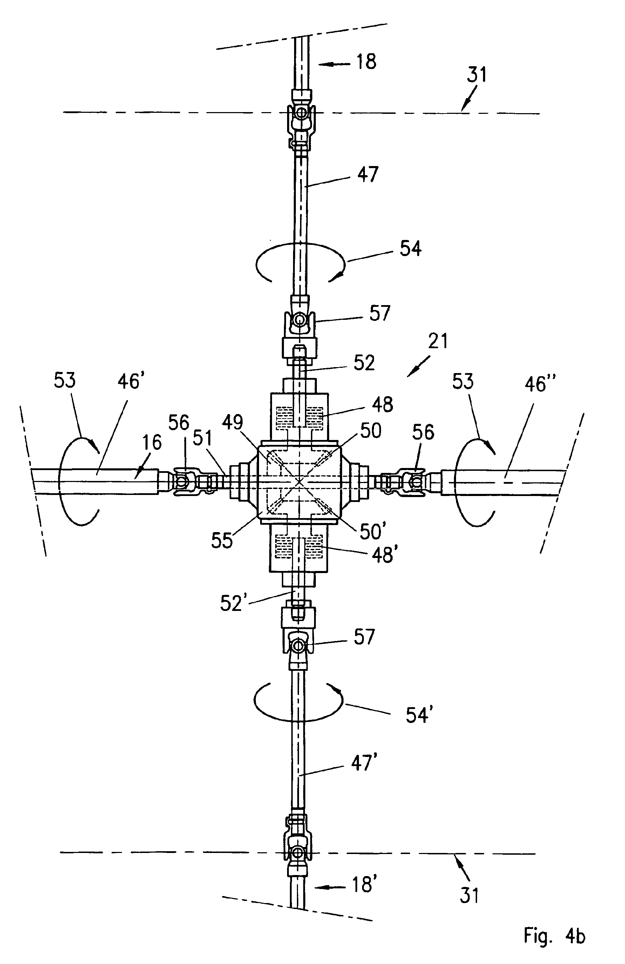

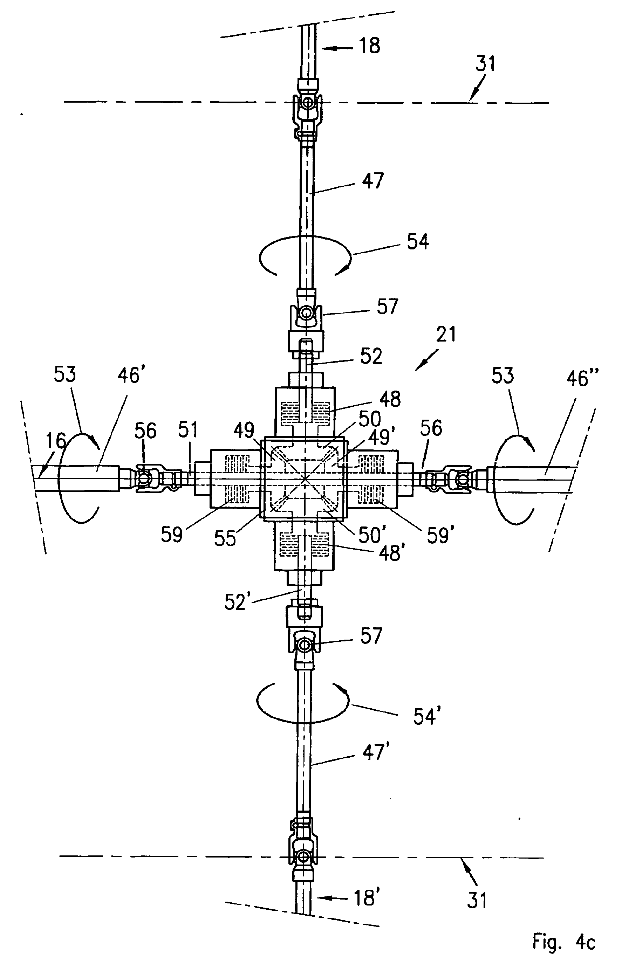

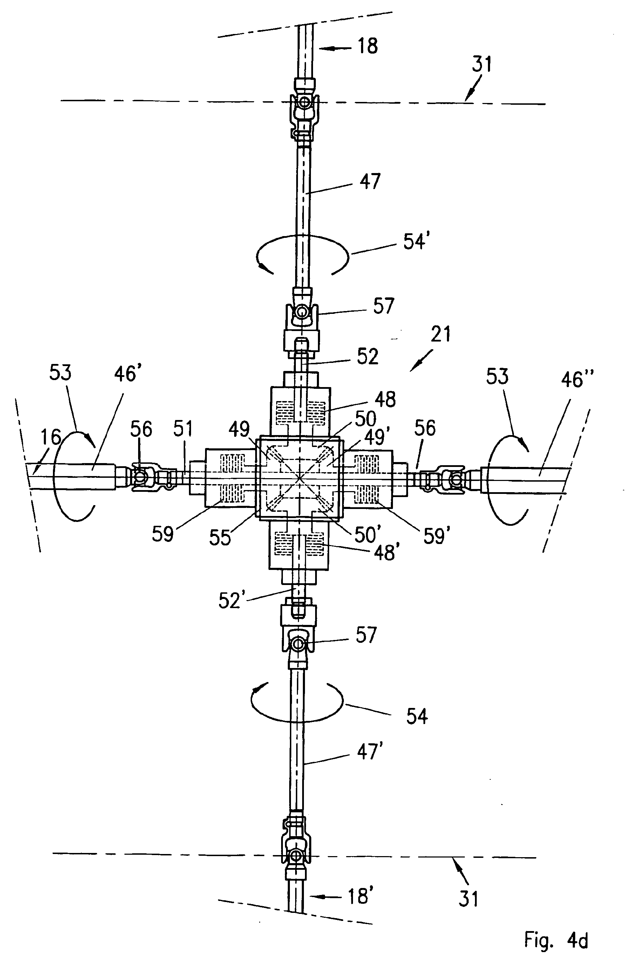

In Fig. 4 ist ein Ausführungsbeispiel für den Antrieb des Kreiselschwaders 1 nach der Erfindung dargestellt. Fig. 4a zeigt einen vergrößerten Ausschnitt aus Fig.4 zur besseren Verdeutlichung weiterer Einzelheiten.

Es handelt sich dabei um ein verzweigtes Antriebssystem auf rein mechanischer Basis. Es besteht aus einem Hauptantriebsstrang 16, bestehend aus in Reihe liegenden Gelenkwellen 46,46',46" mit den darin eingebundenen Winkelgetrieben 20,21,22. An diesen Winkelgetrieben 20,21,22 verzweigen sich die weiteren Antriebsstränge 17,17',18,18',19,19', die zu den Schwadkreiseln 2,2',3,3',4,4' führen und diese antreiben. Die Schwadkreisel 2,2',3,3',4,4' selbst sind mittels allgemein bekanntem Winkelgetriebe, auf dessen Darstellung und Beschreibung daher an dieser Stelle verzichtet werden kann, mit den Enden der Antriebsstränge 17,17',18,18',19,19' verbunden.

Der Hauptantriebsstrang 16 ist dabei mit der Zapfwelle 45 des Traktors 7 oder des Triebkopfes 37 verbunden und er verläuft längs der Fahrtrichtung F etwa in der Hauptmittelebene 36. In dem Hauptantriebsstrang 16 eingebunden sind Winkelgetriebe 20,21,22, die abgehende Abtriebswellen aufweisen, an denen sich Abzweigungsstränge 17,17',18,18',19,19' anschließen. Dabei sind die Antriebswellen als Gelenkwellenverbindungen 47, 47' so ausgebildet, dass sie den Bewegungsformen der Schwadkreisel 2,2',3,3',4,4' sowohl im Betrieb als auch zur Überführung in die Transportstellung gehorchen.

Fig. 4b zeigt ein Ausführungsbeispiel für eine Verzweigung der Antriebsstränge 16,18,18' am Beispiel des Winkelgetriebes 21.

Die mittleren Antriebsstränge 18,18' führen zu den Schwadkreiseln 3,3', wobei diese mit schaltbaren Kupplungen 48,48' zum antriebsseitigen An- oder Abkoppeln der Schwadkreisel 3,3' ausgestattet sind. In einem Getriebegehäuse 55 ist ein Kegelradgetriebe, bestehend aus den Kegelrädern 49,50,50' gelagert. Die Durchtriebswelle 51 als Teil des Hauptantriebsstrangs 16 ist in den Kardangelenken 56 mit den Gelenkwellen 46',46" verbunden. Die Kupplungen 48,48' sind beispielsweise ausgeführt als elektrisch betätigte Lamellenkupplungen. Der eine Teil der Kupplung 48 ist mit dem Kegelrad 50 und der andere Teil mit der Abtriebswelle 52 drehfest verbunden. Anlog gilt dieses für das Kegelrad 50', die Kupplung 48', und die Abtriebswelle 52'. Dabei sind die Abtriebswellen 52,52' in den Kardangelenken 57 mit den Gelenkwellen 47,47', die Teil der Antriebsstränge 18,18' darstellen, verbunden. Die Drehrichtungspfeile geben dabei die Drehrichtungen 53,54,54' der Antriebstränge 16,18,18' an. Durch die Kupplungen 48,48' können somit die Antriebsstränge 18,18' antriebsseitig wahlweise an den Hauptantriebsstrang an- oder abgekoppelt werden.

Fig. 4c zeigt eine erweiterte Ausführung des Schaltgetriebes analog Fig. 4b mit der Möglichkeit der Drehrichtungsumkehr der Antriebstränge 18,18' und damit der Drehrichtungsumkehr der Schwadkreisel 3,3'. Dazu wird das Kegelradgetriebe gemäß Fig. 3b um ein weiteres Kegelrad 49' erweitert. Dabei werden die drehfesten Verbindungen zwischen den Kegelrädern 49 und 49' mit der Durchtriebswelle 51 durch schaltbare Kupplungen 59,59' , die ebenfalls als elektrisch betätigbare Lamellenkupplungen ausgebildet sein können, hergestellt. Durch wahlweise Betätigung und in Eingriffstellung befindliche Kupplungen 59,59', also durch die in Eingriff befindliche Kupplung 59 oder Kupplung 59' kann die Drehrichtung der Abtriebsstränge 18,18' umgekehrt werden. Diese verdeutlicht analog die Fig. 4d, in der anhand der Drehrichtungspfeile in den Abtriebssträngen 18,18' die Veränderung der Drehrichtung 54,54' gegenüber dem Beschaltungszustand analog Fig. 3c verdeutlicht wird.

In dem dargestellten Ausführungsbeispiel sind die Abzweigungsstränge 17,17',18,18',19,19' vorzugsweise durch schaltbare Kupplungen 48,48' zur Übertragung der Antriebsdrehmomente mit den Winkelgetrieben 20,21,22 gekoppelt. Diese Kupplungen 48,48' können beispielsweise elektrisch oder hydraulisch betätigbare und aus der Fahrerkabine heraus fernbedienbar, oder beispielsweise auch manuell betätigbare ein- und ausrückbare Sperrkörperkupplungen sein. Erfindungswesentlich ist in diesem Zusammenhang die Möglichkeit, wenigstens einen der Abzweigungsstränge 17,17',18,18',19,19' oder in erweiterter Form sogar alle Abzweigungsstränge 17,17',18,18',19,19' unabhängig vom jeweils anderen ab- bzw. wieder einschalten zu können.

In einer weiteren Ausgestaltung der Erfindung ist es möglich, vorzugsweise nur die mittleren Antriebsstränge 18,18' in ihrer Drehrichtung umschaltbar zu gestalten. Dieses kann im einfachsten Fall dadurch erzeugt werden, dass das jeweilige Winkelgetriebe 21 beidseitig der Längsmittelebene 36 jeweils zwei Abtriebswellenzapfen mit unterschiedlichen Drehrichtungen aufweist, so dass die sich daran anschließenden Gelenkwellen lediglich umgesteckt werden, um unterschiedliche Drehrichtungen zu erzeugen.

Alternativ können statt schaltbarer Kupplungen auch Schaltgetriebe eingesetzt werden, die es ermöglichen, wechselnde Drehrichtungen oder abschaltbare Antriebsstränge zu erzeugen.

Diese Ausbildung der Antriebsstränge ermöglicht insbesondere mit der Möglichkeit der Drehrichtungsumkehr die unter Fig. 1 und Fig. 3 näher erläuterten unterschiedlichen Möglichkeiten der Schwadbildung und deren Schwadablage.

Prinzipiell kann das nachfolgend beschriebene Antriebssystem auch durch hydrostatische oder elektrische Antriebe, direkt oder indirekt angeblockt an den Schwadkreisel 2,2',3,3',4,4', ersetzt werden. Hydrostatische oder elektrische direkt an die Schwadkreisel 2,2',3,3',4,4' angeblockte Antriebsmotore ermöglichen es auf besonders einfache Art und Weise die Schwadkreisel in ihrer Drehrichtung 23, 23' umzusteuern, bzw. diese antriebsseitig abzuschalten.

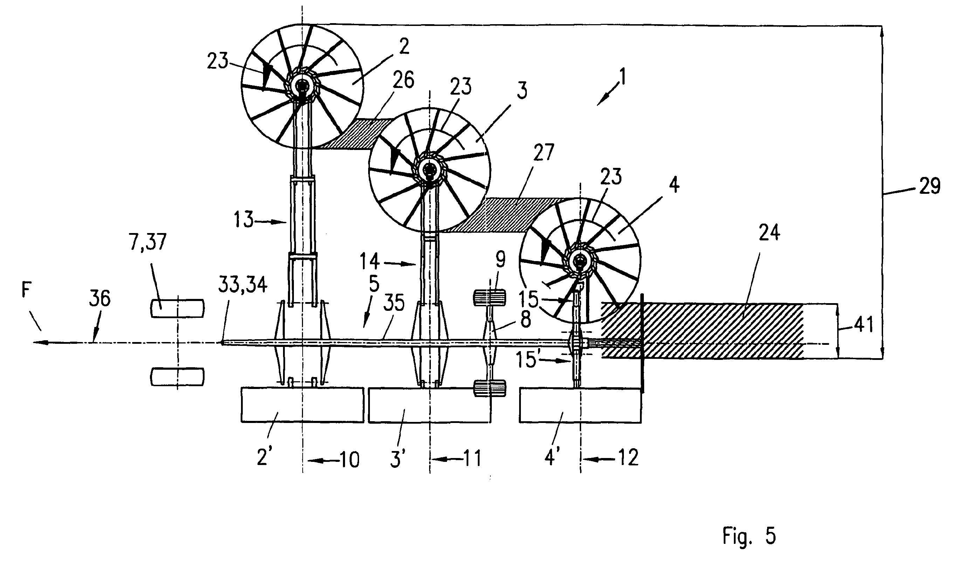

Eine weitere besonders vorteilhafte Ausgestaltung der Erfindung besteht darin, dass sich beispielsweise alle Schwadkreisel einer linken oder rechten Hälfte eines Kreiselschwaders 1 nach der Erfindung hochklappen und antriebsseitig völlig außer Eingriff bringen lassen, so dass die im Eingriff verbleibende andere Hälfte des Kreiselschwaders 1 sich als reiner Seitenschwader nutzen lässt. Ein derartiger Einsatzfall ist in Fig. 5 dargestellt. Somit halbiert sich die Gesamt-Arbeitsbreite 28 auf eine reduzierte Arbeitsbreite 29.

Weitere vorteilhafte Einsatzmöglichkeiten nach der Erfindung bieten sich durch die variable Gestaltung der Arbeitsbreite 28', indem eben insbesondere die Ausleger 12,12',13,13' in ihrer ausgefahrenen Länge variiert werden können.

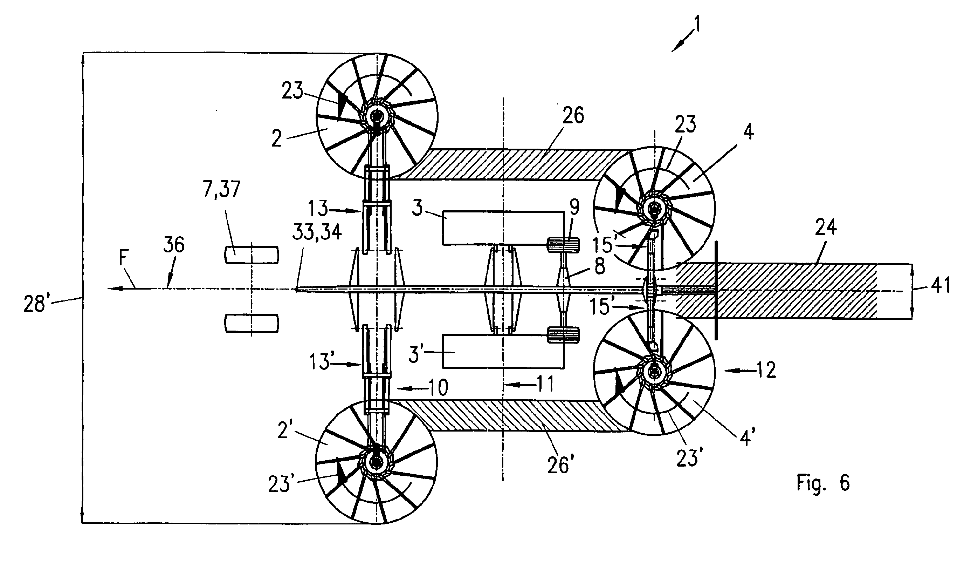

Fig.6 zeigt einen derartigen Anwendungsfall nach der Erfindung. Die beiden mittleren Schwadkreisel 3,3' sind hochgeklappt, und die beiden vorderen Schwadkreisel 2,2' sind im Einsatz, wobei die vorderen Ausleger 13,13' in ihrer Länge verkürzt wurden, so dass sich die Arbeitsbreite 28' eingestellt hat. Dabei ist die Arbeitsbreite 28' so eingestellt, dass sich trotz der hochgeklappten Schwadkreisel 3,3' eine lückenlose Überdeckung der Einzugsbereiche der verbleibenden im Einsatz befindlichen Schwadkreisel 2,3 bzw. 2',3' einstellt und der Kreiselschwader 1 somit als Mittelschwader mit reduzierter Arbeitsbreite 28' eingesetzt werden kann. Dieser Vorteil greift insbesondere dann, wenn die mittleren Schwadkreisel 3,3' in Ihrer Drehrichtung so ausgelegt und nicht veränderbar sind, dass der Kreiselschwader 1 beim Einsatz aller Schwadkreisel 2,2',3,3'4,4' lediglich drei Einzelschwade 25 gemäß Fig. 3 bilden und ablegen kann.

Wird somit auf die Umschaltbarkeit des mittleren Winkelgetriebes im Hinblick auf Drehrichtungsumkehr verzichtet, und ist die Drehrichtungszuordnung als fester Bestandteil des Antriebsstrangs so konfiguriert, dass die Schwadbildung und Schwadablage gemäß Fig. 3 ausgelegt ist, so kann allein durch Hochklappen der Schwadkreisel 3,3', das heißt durch Außerbetriebsetzung der mittleren Staffelreihe 11, wahlweise ein reiner Mittelschwader oder alternativ durch Herunterklappen der gleichen Staffelreihe ein Großschwader mit Mehrfachschwadablage, im dargelegten Ausführungsbeispiel mit 3-fach Schwadablage, erzeugt werden.

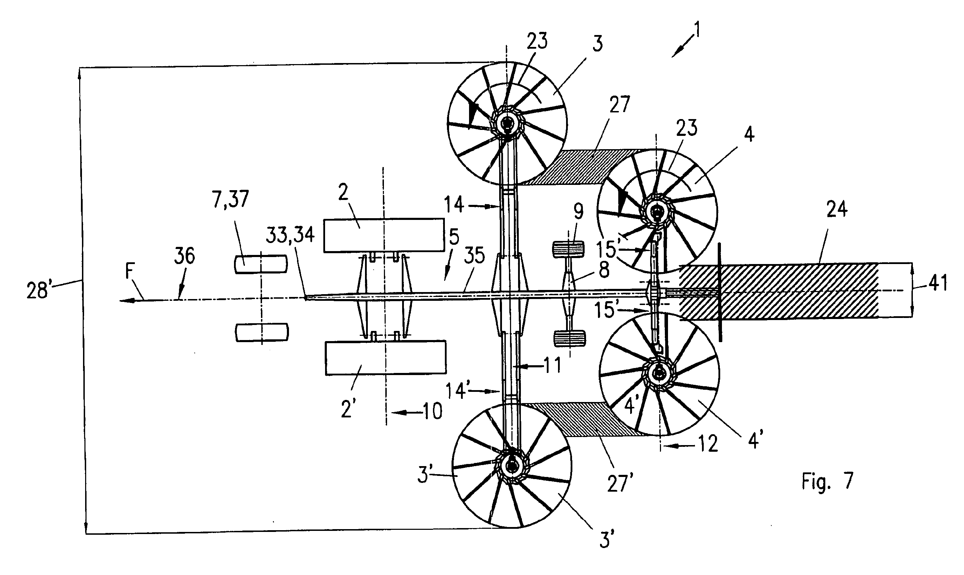

Ebenfalls kann die Arbeitsbreite von der Arbeitsbreite 28 auf eine Arbeitsbreite 28' verringert werden, indem die vorderen Arbeitskreisel 2,2' völlig hochgeklappt und antriebsseitig außer Eingriff gebracht werden. Dieser Einsatzfall ist in Fig. 7 dargestellt.

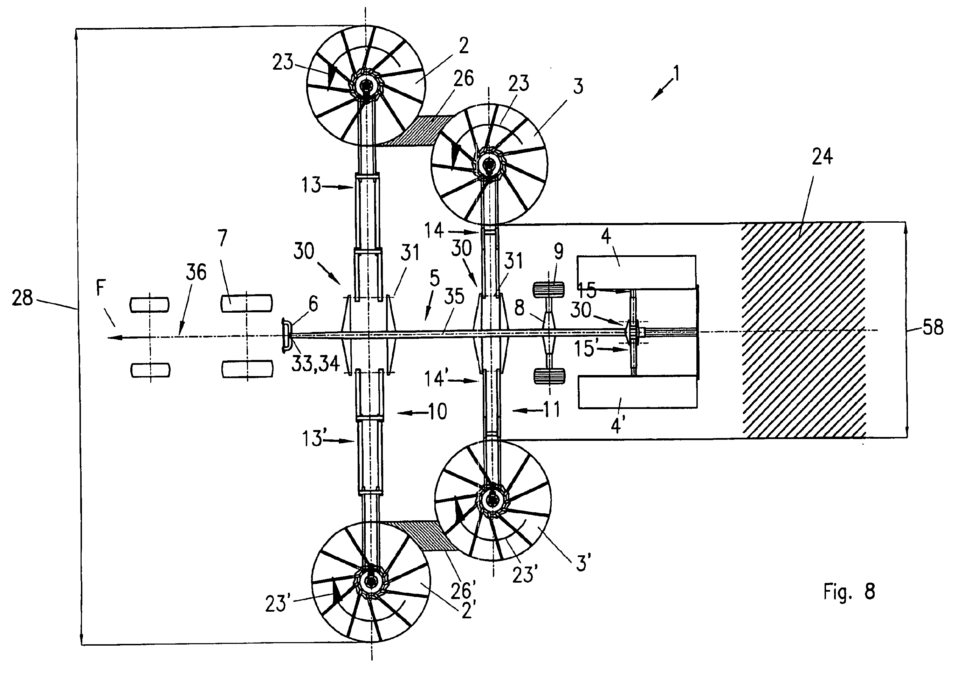

Fig. 8 zeigt eine weitere Anwendungsmöglichkeit des Kreiselschwaders 1 nach der Erfindung zur Bildung von Breitschwaden 58 zur Aufnahme durch eine Breit-pick-up als Aufsammeleinrichtung für nachfolgende Arbeitsgänge. Eine derartige Breit-pick-up-Aufsammeleinrichtung kann beispielsweise als Vorsatzgerät für Feldhäcksler zum Einsatz kommen.

Somit bietet die Erfindung ein großes Spektrum an variablen Einsatzmöglichkeiten des Kreiselschwader 1 als Großflächenschwader nach der Erfindung.

Allein durch steuerungstechnische Beschaltungsmaßnahmen, die fernbedienbar vom Fahrersitz aus der Fahrerkabine heraus erfolgen können, kann in Verbindung mit den Vorteilen der Erfindung, wahlweise ein Kreiselschwader 1 als Mittelschwader mit erheblich variabler Arbeitsbreite 28,28' und variabler Schwadbreite 41, als Kreiselschwader 1 mit Mehrfachschwadablage und variabler Schwadbreite 41 in Verbindung mit variablen Schwadabständen 40,40' und als reiner Seitenschwader am Ort des momentanen Einsatzes ohne Umbauarbeiten in Funktion gebracht werden.

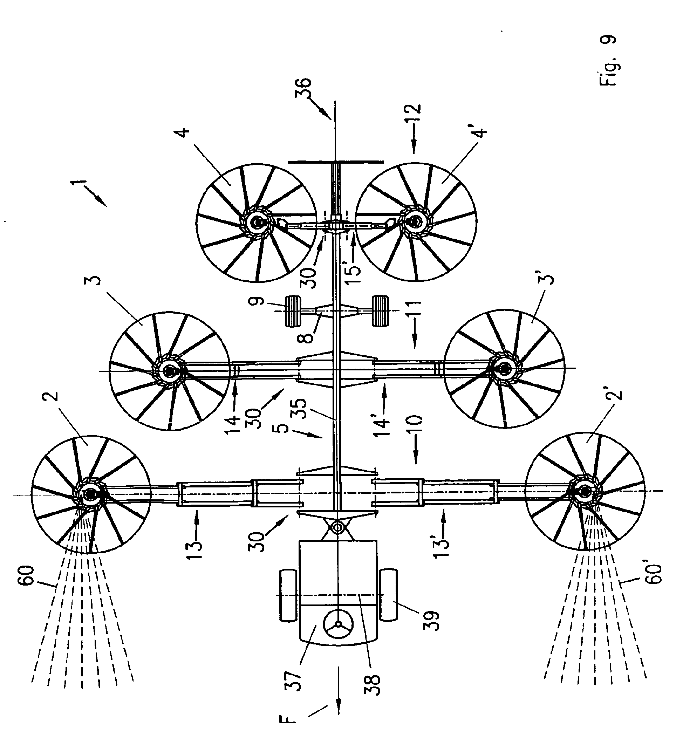

Wegen der großen Arbeitsbreite 28, die etwa bei 22 Metern liegen kann, ist es zweckdienlich, in einer weiteren vorteilhaften Ausgestaltung der Erfindung Kreiselschwader 1 dieser Größenordnung mit einem Bestandskantenführungs- und/oder Hinderniserkennungssystem 60,60' auszurüsten, wie dieses in Fig. 9 symbolisch dargestellt ist. Diese an sich bekannten Systeme, beispielsweise lasergeführt, ermöglichen einem derartigen Führungssystem die Grenzlinie zwischen einer bereits geräumten Fläche und der noch nicht geräumten Fläche zu erkennen, so dass die Steuerung des Traktors 7 oder des selbstfahrenden Kreiselschwaders automatisch erfolgen kann. Hinderniserkennungssysteme, die auch in dem Bestandskantenführungssystem integriert sein können, helfen dabei Kollisionen, beispielsweise mit Strommasten, Bäumen oder Zaunpfählen zu verhindern.

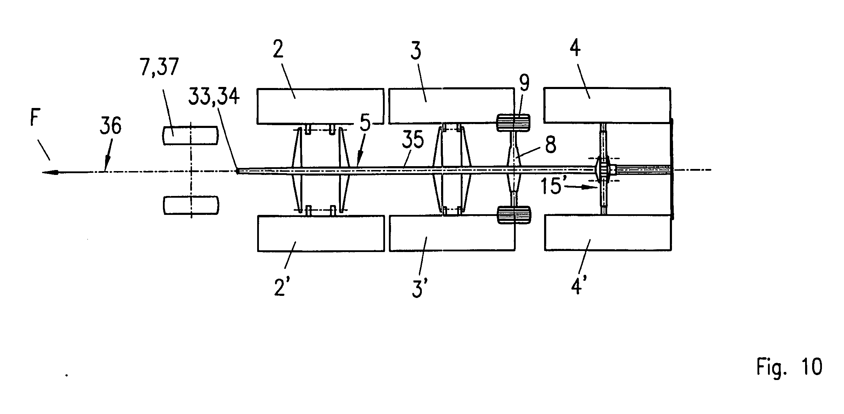

In Fig. 10 ist ein Kreiselschwader 1 nach der Erfindung in Transportstellung mit völlig seitlich hochgeklappten Schwadkreiseln 2,2',3,3',4,4' dargestellt. Dazu werden alle längenveränderbaren Ausleger vor dem Hochklappen in ihre kürzeste Position überführt. Ergänzend kann dazu beispielsweise zusätzlich eine Absenkung des Fahrgestells erfolgen, so dass dadurch die Gesamthöhe des Kreiselschwaders 1 in der Transportfahrt zusätzlich reduziert werden kann.

## Patentansprüche

1. Kreiselschwader (1) mit um etwa vertikale Achsen umlaufend angetriebene in Fahrtrichtung (F) hintereinander gestaffelt angeordnete am Boden durch Laufräder abgestützte Schwadkreisel zum Zusammenrechen von am Boden liegendem Erntegut, deren Schwadkreisel durch Hochschwenken aus der Arbeitsstellung in eine Transportstellung bringbar an Auslegern in Klappgelenken (30) mit einem Fahrgestell (5) verbunden sind, wobei die Schwadkreisel (2, 2', 3, 3', 4, 4') in V-förmiger Anordnung gestaffelt mindestens sechs Sohwadkreisel umfassen, wobei der Kreiselschwader (1) aus wenigstens drei Staffelreihen (10,11,12) bildenden Schwadkreiseln (2, 2', 3, 3', 4, 4') gebildet wird, **dadurch gekennzeichnet, dass** zwischen der in Fahrtrichtung betrachteten zweiten und dritten Staffelreihe wenigstens ein Fahrwerk angeordnet ist.

2. Krelsefschwader (1) nach Anspruch 1 , **dadurch gekennzeichnet, dass** der Kreiselschwader (1) als selbstfahrender Kreiselschwader ausgebildet ist.

3. Kreiselschwader (1) nach Anspruch 1 oder 2 , **dadurch gekennzeichnet, dass** eine Staffelreihe aus wenigstens zwei Schwadkreiseln (2,2');(3,3');(4,4') besteht.

4. Kreiselschwader (1) nach Anspruch 1 oder 2 in Verbindung mit Anspruch 3, **dadurch gekennzeichnet, dass** die Staffelung der Schwadkreisel (2,2', 3,3', 4,4') so ausgebildet ist, dass ein in Fahrtrichtung V-förmig offenes Zuordnungsschema gebildet wird.

5. Kreiselschwader (1) nach Anspruch 1 oder 2, **dadurch gekennzeichnet, dass** wenigstens die Schwadkreisel (2,2') der ersten Staffelreihe (10) längenveränderbare Ausleger (12) aufweisen, die mit dem Fahrgestell (5) in Wirkverbindung stehen.

6. Kreiselschwader (1) nach Anspruch 1 oder 2, **dadurch gekennzeichnet, dass** die erste Staffelreihe (10) und zweite Staffelreihe (11) längenveränderbare Ausleger (12) aufweisen, die mit dem Fahrgestell (5) in Wirkverbindung stehen.

7. Kreiselschwader (1) nach Anspruch 1 oder 2, **dadurch gekennzeichnet, dass** alle Staffelreihen (10,11,12) längenveränderbare Ausleger (12,13,14) aufweisen, die mit dem Fahrgestell (5) in Wirkverbindung stehen.

8. Kreiselschwader (1) nach Anspruch 4, **dadurch gekennzeichnet, dass** die Schwadkreisel (2,2') der ersten Staffelreihe (10) mittels wenigstens zweifach teleskopierbaren Auslegers (12) mit dem Fahrgestell (5) in Wirkverbindung stehen.

9. Kreiselschwader (1) nach Anspruch 5, **dadurch gekennzeichnet, dass** die Schwadkreisel (3,3') der zweiten Staffelreihe (11) mittels wenigstens einfach teleskopierbare Auslegers (13) mit dem Fahrgestell (5) in Wirkverbindung stehen.

10. Kreiselschwader (1) nach Anspruch 1 oder 2 in Verbindung mit Anspruch 3, **dadurch gekennzeichnet, dass** alle Schwadkreisel (2,2', 3,3', 4,4') der Staffelreihen (10,11,12) wenigstens einfach teleskopierbare Ausleger (12,13,14) aufweisen, die mit dem Fahrgestell (5) in Wirkverbindung stehen.

11. Kreiselschwader (1) nach einem oder mehreren der vorhergehenden Ansprüche, **dadurch gekennzeichnet, dass** jeder Schwadkreisel (2,2', 3,3', 4,4') über einen verzweigten Antriebsstrang (17,17',18,18',19,19') ausgehend von einem Hauptantriebsstrang (16) mit diesem antriebseitig in Wirkverbindung steht.

12. Kreiselschwader (1) nach einem oder mehreren der vorhergehenden Ansprüche, **dadurch gekennzeichnet, dass** die Verzweigungen des Hauptantriebsstrang (16) zu den vorderen, mittleren und hinteren Antriebssträngen (17,17',18,18',19,19') durch Winkelgetriebe (20,21,22) gebildet werden.

13. Kreiselschwader (1) nach Anspruch 12, **dadurch gekennzeichnet, dass** wenigstens ein von einem Winkelgetriebe (20;21;22) abzweigender Antriebsstrang (17,17',18,18',19,19') antriebsseitig von seinem Hauptantriebsstrang wahlweise an- oder abgekoppelt werden kann.

14. Kreiselschwader (1) nach Anspruch 12, **dadurch gekennzeichnet, dass** alle von einem Winkelgetriebe (20;21;22) abzweigenden Antriebsstränge (17,17',18,18',19,19') antriebsseitig von ihrem Hauptantriebsstrang wahlweise an- oder abgekoppelt werden können.

15. Kreiselschwader (1) nach Anspruch 12, **dadurch gekennzeichnet, dass** wenigstens ein an- oder abkoppelbarer Antriebsstrang (17,17',18,18',19,19') eines Schwadkreisels (2,2',3,3',4,4') fernbetätigbar schaltbar an- oder abkoppelbar ist.

16. Kreiselschwader (1) nach einem oder mehreren der vorhergehenden Ansprüche, **dadurch gekennzeichnet, dass** die Drehrichtungen (23,23') der Schwadkreisel (2,2';3,3';4,4') wenigstens einer Staffelreihe (10,11,12) wahlweise und unabhängig von den Drehrichtungen (23,23') anderen Staffelreihen (10,11,12) umkehrbar und damit veränderbar sind.

17. Kreiselschwader (1) nach einem oder mehreren der vorhergehenden Ansprüche, **dadurch gekennzeichnet, dass** wenigstens die Schwadkreisel (2,2', 3,3', 4,4') einer Staffelreihe (10,11,12) über einen hydrostatischen Antrieb verfügen.

18. Kreiselschwader (1) nach Anspruch 17, **dadurch gekennzeichnet, dass** die zumindest hydrostatisch angetriebenen Schwadkreisel (2,2';3,3';4,4') wahlweise antriebsseitig an- oder abschaltbar sind.

19. Kreiselschwader (1) nach Anspruch 17, **dadurch gekennzeichnet, dass** die Drehrichtungen (23,23') zumindest der hydrostatisch angetriebenen Schwadkreisel wahlweise und unabhängig von den Drehrichtungen (23,23') der Schwadkreisel anderen Staffelreihen (10,11,12) umkehrbar und damit veränderbar sind.

20. Kreiselschwader (1) nach einem oder mehreren der vorhergehenden Ansprüche, **dadurch gekennzeichnet, dass** jeder der Schwadkreisel (2,2', 3,3', 4,4') separat angesteuert und antriebsseitig zu oder abgeschaltet oder in seiner Drehrichtung umgesteuert werden kann.

21. Kreiselschwader (1) nach einem oder mehreren der vorhergehenden Ansprüche, **dadurch gekennzeichnet, dass** die Schwadkreisel (2,2', 3,3', 4,4') gruppenweise in der Kombination von Schwadkreiseln (2,3,4) oder (2',3',4') separat angesteuert und antriebsseitig als Gruppe komplett zu oder abgeschaltet werden kann.

22. Kreiseischwader (1) nach einem oder mehreren der vorhergehenden Ansprüche, **dadurch gekennzeichnet, dass** die Drehrichtungen (23,23') der Schwadkreisel (2,2', 3,3', 4,4') einander so zugeordnet sind, dass diese die Bildung eines etwa mittig zur Längsmittelebene (36) abgelegten Großschwads (24) ermöglicht.

23. Kreiselschwader (1) nach einem oder mehreren der vorhergehenden Ansprüche, **dadurch gekennzeichnet, dass** die Drehrichtungen (23,23') der Schwadkreisel (2,2', 3,3', 4,4') einander so zugeordnet sind, das diese die Bildung von drei einander beabstandeter Einzelschwaden 25 ermöglicht.

24. Kreiselschwader (1) nach einem oder mehreren der vorhergehenden Ansprüche, **dadurch gekennzeichnet, dass** die Schwadkreisel (2,3,4,) oder (2',3',4') gruppenweise links oder rechts der Längsmittelebene (36) hochgeschwenkt werden können, und der Kreiselschwader (1) als rechtsablegender oder linksablegender Seitenschwader zur Bildung eines Großschwads 24 etwa im Bereich der Längsmittelebene (36) verwendet werden kann.

25. Kreiselschwader (1) nach einem oder mehreren der vorhergehenden Ansprüche, **dadurch gekennzeichnet, dass** durch Hochklappen der ersten Staffelreihe (10) ein Großschwad (24) als Mittelschwad etwa im Bereich der Längsmittelebene (36) gebildet werden kann.

26. Kreiselschwader (1) nach einem oder mehreren der vorhergehenden Ansprüche, **dadurch gekennzeichnet, dass** durch Hochklappen der zweiten Staffelreihe (11) ein Großschwad (24) als Mittelschwad etwa im Bereich der Längsmittelebene (36) gebildet werden kann.

27. Kreiselschwader (1) nach einem oder mehreren der vorhergehenden Ansprüche, **dadurch gekennzeichnet, dass** durch die Längenveränderbarkeit der vorderen Ausleger (13,13') die Arbeitsbreite (28,28') variiert werden kann.

28. Kreiselschwader (1) nach einem oder mehreren der vorhergehenden Ansprüche, **dadurch gekennzeichnet, dass** durch die Längenveränderbarkeit der mittleren Ausleger (14,14') die Arbeitsbreite (28') variiert werden kann.

29. Kreiseischwader (1) nach einem oder mehreren der vorhergehenden Ansprüche, **dadurch gekennzeichnet, dass** durch die Längenveränderbarkeit der Ausleger (13,13',14,14',15,15') die Überdeckung der Schwadkreisel (2,3,4); (2',3',4') untereinander variiert werden kann.

30. Kreiselschwader (1) nach einem oder mehreren der vorhergehenden Ansprüche, **dadurch gekennzeichnet, dass** durch Hochklappen der dritten Staffelreihe (11) ein Breitschwad (58) als Mittelschwad etwa im Bereich der Längsmittelebene (36) gebildet werden kann.

31. Kreiselschwader (1) nach einem oder mehreren der vorhergehenden Ansprüche, **dadurch gekennzeichnet, dass** durch Hochklappen aller Ausleger (13,13',14,14',15,15') der Staffelreihen (10,11,12) und Einfahren der teleskopierbaren Ausleger (13,13',14,14') wenigstens der zwei Staffelreihen (10,11) der Kreiselschwader in eine Transportstellung überführt werden kann.

32. Kreiselschwader (1) nach einem oder mehreren der vorhergehenden Ansprüche, **dadurch gekennzeichnet, dass** der Kreiselschwader (1) mit einer Vorrichtung zur Hinderniserkennung (60,60') ausgestattet ist.

33. Kreiselschwader (1) nach einem oder mehreren der vorhergehenden Ansprüche, **dadurch gekennzeichnet, dass** die Vorrichtung zur Hinderniserkennung (60,60') als Bestandskantenführungssystem genutzt werden kann.

34. Kreiselschwader (1) nach einem oder mehreren der vorhergehenden Ansprüche, **dadurch gekennzeichnet, dass** die Laufräder (9) des Fahrwerks (8) unabhängig von der Lenkung eines Traktors (7) oder eines Triebkopfes (37) gelenkt werden können.

35. Kreiselschwader (1) nach einem oder mehreren der vorhergehenden Ansprüche, **dadurch gekennzeichnet, dass** wenigstens ein Stellantrieb der längenveränderbaren Ausleger mit einem Wegmeßsystem zur momentanen Lagebestimmung eines Schwadkreisels (2,2',3,3',4,4') in bezug auf die Längsmittelebene (36) ausgestattet ist.

## Claims

1. Rotary windrower (1) with swath circles (2, 2', 3, 3', 4, 4'), that are driven about roughly vertical axes, arranged staggered behind one another in travelling direction (F) and supported on the ground by rotating wheels, for raking up the harvested crop lying on the ground, the swath circles of which are connected to an underframe (5) attached to radial arms in folding joints (30) by pivoting up out of the working position into a transport position, wherein the swath circles (2, 2', 3, 3', 4, 4') that are staggered in a V-shaped formation comprise at least six swath circles, wherein the rotary windrower (1) is formed by at least three staggered rows (10, 11, 12), **characterised in that** between the second and third staggered row as viewed in travelling direction at least one basic structure is arranged.

2. Rotary windrower (1) according to claim 1, **characterised in that** the rotary windrower (1) is designed to be self-propelled.

3. Rotary windrower (1) according to claim 1 or 2, **characterised in that** a staggered row consists of at least two swath circles (2, 2'); (3, 3'); (4, 4').

4. Rotary windrower (1) according to claim 1 or 2 in connection with claim 3, **characterised in that** the staggering of the swath circles (2, 2', 3, 3', 4, 4') is designed so that a V-shaped open arrangement is formed in travelling direction.

5. Rotary windrower (1) according to claim 1 or 2, **characterised in that** at least the swath circles (2, 2') of the first staggered row (10) comprise length-adjustable radial arms (12) which are in active connection with the underframe (5).

6. Rotary windrower (1) according to claim 1 or 2, **characterised in that** the first staggered row (10) and second staggered row (11) comprise length-adjustable radial arms (12) which are in active connection with the underframe (5).

7. Rotary windrower (1) according to claim 1 or 2, **characterised in that** all of the staggered rows (10, 11, 12) comprises length-adjustable radial arms (12, 13, 14) which are in active connection with the underframe (5).

8. Rotary windrower (1) according to claim 4, **characterised in that** the swath circles (2, 2') of the first staggered row (10) are in active connection with the underframe (5) by means of a radial arm (12) that is telescopic in at least two places.

9. Rotary windrower (1) according to claim 5, **characterised in that** the swath circles (3, 3') of the second staggered row (11) are in active connection with the underframe (15) by means of a radial arm that is telescopic in at least in one place.

10. Rotary windrower (1) according to claim 1 or 2 in connection with claim 3, **characterised in that** all of the swath circles (2, 2', 3, 3', 4, 4') of the staggered rows (10, 11,12) comprise radial arms (12, 13, 14) that are telescopic in at least one place, which are in active connection with the underframe (5).

11. Rotary windrower (1) according to one or more of the preceding claims, **characterised in that** each swath circle (2, 2', 3, 3', 4, 4') is in active connection on the drive side with a main driveline, by means of a branched driveline (17, 17', 18, 18', 19, 19') emerging from said main driveline (16).

12. Rotary windrower (1) according to one or more of the preceding claims, **characterised in that** the branches from the main driveline (16) to the front, middle and rear drivelines (17, 17', 18, 18', 19, 19') are formed by angular gears (20, 21, 22).

13. Rotary windrower (1) according to claim 12, **characterised in that** at least one driveline (17, 17', 18, 18', 19, 19') branching off from an angular gear (20; 21; 22) can be optionally coupled to or uncoupled from its main driveline on the drive side.

14. Rotary windrower (1) according to claim 12, **characterised in that** all of the drivelines (17, 17', 18, 18', 19, 19') branching off from an angular gear (20; 21; 22) can be optionally coupled to or uncoupled from its main driveline on the drive side.

15. Rotary windrower (1) according to claim 12, **characterised in that** at least one couplable or uncouplable driveline (17, 17', 18, 18', 19, 19') of a swath circle (2, 2', 3, 3', 4, 4') can be coupled or uncoupled by remote control.

16. Rotary windrower (1) according to one or more of the preceding claims, **characterised in that** the directions of rotation (23, 23') of the swath circles (2,2', 3, 3', 4, 4') of at least one staggered row (10, 11, 12) can be optionally reversed and thus changed regardless of the directions of rotation (23, 23') of the other staggered rows (10, 11, 12).

17. Rotary windrower (1) according to one or more of the preceding claims, **characterised in that** at least the swath circles (2, 2', 3, 3', 4, 4') of a staggered row (10, 11, 12) are provided with a hydrostatic drive.

18. Rotary windrower (1) according to claim 17, **characterised in that** the at least hydrostatically driven swath circles (2, 2', 3, 3', 4, 4') can be optionally connected or disconnected on the drive side.

19. Rotary windrower (1) according to claim 17, **characterised in that** the directions of rotation (23, 23') at least of the hydrostatically driven swath circles can be reversed optionally and can thus be changed regardless of the directions of rotation (23, 23') of the swath circles of other staggered rows (10, 11, 12).

20. Rotary windrower (1) according to one or more of the preceding claims, **characterised in that** each of the swath circles (2, 2', 3, 3', 4, 4') can be driven separately and can be connected or disconnected on the drive side or reversed in its direction of rotation.

21. Rotary windrower (1) according to one or more of the preceding claims, **characterised in that** the swath circles (2, 2', 3, 3', 4, 4') can be driven in groups in the combination of swath circles (2, 3, 4) or (2', 3', 4') or separately, and can be completely connected or disconnected on the drive side as a group.

22. Rotary windrower (1) according to one or more of the preceding claims, **characterised in that** the directions of rotation (23, 23') of the swath circles (2, 2', 3, 3', 4, 4') are set up relative to one another so that they enable the formation of a large swath (24) arranged centrally relative to the longitudinal middle plane (36).

23. Rotary windrower (1) according to one or more of the preceding claims, **characterised in that** the directions of rotation (23, 23') of the swath circles (2, 2', 3, 3', 4,4') relative to one another are set up so that they enable the formation of three relatively spaced individual swaths (25).

24. Rotary windrower (1) according to one or more of the preceding claims, **characterised in that** the swath circles (2, 3, 4) or (2', 3', 4') can be pivoted upwards in groups left or right of the longitudinal middle plane (36) and the rotary windrower (1) can be used as a right-laying or left-laying side swath to form a large swath (24) roughly in the region of the longitudinal middle plane (36).

25. Rotary windrower (1) according to one or more of the preceding claims, **characterised in that** by folding up the first staggered row (10) a large swath (24) can be formed as a middle swath roughly in the region of the longitudinal middle plane (36).

26. Rotary windrower (1) according to one or more of the preceding claims, **characterised in that** by folding up the second staggered row (11) a large swath (24) can be formed as a middle swath roughly in the region of the longitudinal middle plane (36).

27. Rotary windrower (1) according to one or more of the preceding claims, **characterised in that** by changing the length of the front radial arms (13, 13') the working width (28, 28') can be varied.

28. Rotary windrower (1) according to one or more of the preceding claims, **characterised in that** by changing the length of the middle radial arms (14, 14') the working width (28, 28') can be varied.

29. Rotary windrower (1) according to one or more of the preceding claims, **characterised in that** by changing the length of the radial arms (13, 13', 14, 14',15, 15') the relative overlapping of the swath circles (2, 3, 4); (2', 3', 4') can be varied.

30. Rotary windrower (1) according to one or more of the preceding claims, **characterised in that** by folding up the third staggered row (11) a broad swath (58) can be formed as a middle swath roughly in the region of the longitudinal middle plane (36).

31. Rotary windrower (1) according to one or more of the preceding claims, **characterised in that** by folding up all of the radial arms (13, 13', 14, 14', 15, 15') of the staggered rows (10, 11, 12) and pushing in the telescopic radial arms (13, 13', 14, 14') at least of the two staggered rows (10, 11) the rotary windrower can be brought into a transport position.

32. Rotary windrower (1) according to one or more of the preceding claims, **characterised in that** the rotary windrower (1) is equipped with a device for identifying obstacles (60, 60').

33. Rotary windrower (1) according to one or more of the preceding claims, **characterised in that** the device for identifying obstacles (60, 60') can be used as a stock edge guiding system.

34. Rotary windrower (1) according to one or more of the preceding claims, **characterised in that** the rotating wheels (9) of the underframe (8) can be steered independently of the steering of a tractor (7) or a drive head (37).

35. Rotary windrower (1) according to one or more of the preceding claims, **characterised in that** at least one actuating drive of the length-adjustable radial arms is equipped with a position measuring system for determining the current position of a swath circle (2, 2', 3, 3', 4, 4') in relation to the longitudinal middle plane (36).

## Revendications

1. Andaineur rotatif (1) comportant des rotors d'andaineur afin de ramasser la récolte au sol, lesquels sont supportés au sol par des roues mobiles, agencés de manière échelonnée les uns derrière les autres dans le sens de la marche (F) et entraînés en rotation autour d'axes approximativement verticaux, dont les rotors d'andaineur peuvent être basculés vers le haut hors de la position de travail dans une position de transport et sont reliés à un châssis (5) sur des bras dans des articulations rabattables (30), les rotors d'andaineur (2,2',3,3',4,4') comprenant aux moins six rotors d'andaineur de manière échelonnée dans un agencement en V, l'andaineur rotatif (1) comprenant des rotors d'andaineur (2,2',3, 3',4,4') formant au moins trois rangées échelonnées (10, 11, 12),
**caractérisé en ce qu'**il est agencé au moins un dispositif de déplacement entre la deuxième rangée échelonnée et la troisième rangée échelonnée vues dans le sens de la marche.

2. Andaineur rotatif (1) selon la revendication 1,
**caractérisé en ce que** l'andaineur rotatif (1) est réalisé en tant qu'andaineur rotatif automoteur.

3. Andaineur rotatif (1) selon la revendication 1 ou 2,
**caractérisé en ce qu'**une rangée échelonnée se compose d'au moins deux rotors d'andaineur (2,2'), (3,3'), (4,4').

4. Andaineur rotatif (1) selon la revendication 1 ou 2 en liaison avec la revendication 3,
**caractérisé en ce que** la disposition échelonnée des rotors d'andaineur (2,2',3, 3',4,4') est réalisée de telle façon qu'il se forme un schéma de coordination ouvert en forme de V dans le sens de la marche.

5. Andaineur rotatif (1) selon la revendication 1 ou 2,
**caractérisé en ce qu'**au moins les rotors d'andaineur (2,2') de la première rangée échelonnée (10) présentent des bras réglables en longueur (12), lesquels bras sont en liaison active avec le châssis (5).

6. Andaineur rotatif (1) selon la revendication 1 ou 2,
**caractérisé en ce que** la première rangée échelonnée (10) et la deuxième rangée échelonnée (11) présentent des bras réglables en longueur (12), lesquels bras sont en liaison active avec le châssis (5).

7. Andaineur rotatif (1) selon la revendication 1 ou 2,
**caractérisé en ce que** toutes les rangées échelonnées (10, 11, 12) présentent des bras réglables en longueur (12,13,14), lesquels bras sont en liaison active avec le châssis (5).

8. Andaineur rotatif (1) selon la revendication 4,
**caractérisé en ce que** les rotors d'andaineur (2,2') de la première rangée échelonnée (10) sont en liaison active avec le châssis (5) par le biais de bras télescopiques au moins doubles (12).

9. Andaineur rotatif (1) selon la revendication 5,
**caractérisé en ce que** les rotors d'andaineur (3,3') de la deuxième rangée échelonnée (11) sont en liaison active avec le châssis (5) par le biais de bras télescopiques au moins simples (13).

10. Andaineur rotatif (1) selon la revendication 1 ou 2 en liaison avec la revendication 3,
**caractérisé en ce que** tous les rotors d'andaineur (2,2',3,3',4,4') des rangées échelonnées (10, 11, 12) présentent des bras télescopiques au moins simples (12,13,14) qui sont en liaison active avec le châssis (5).

11. Andaineur rotatif (1) selon une ou plusieurs des revendications précédentes,
**caractérisé en ce que** chaque rotor d'andaineur (2, 2', 3, 3', 4, 4') est en liaison active côté transmission avec une transmission principale (16) par le biais d'une transmission ramifiée (17,17',18,18',19,19') partant de cette dernière.

12. Andaineur rotatif (1) selon une ou plusieurs des revendications précédentes,
**caractérisé en ce que** les ramifications de la transmission principale (16) vers les transmissions avant, centrale et arrière (17,17',18,18',19,19') sont formées par des engrenages coniques (20,21,22).

13. Andaineur rotatif (1) selon la revendication 12,
**caractérisé en ce qu'**au moins une transmission (17, 17', 18, 18', 19, 19') dérivée d'un engrenage conique (20,21,22) peut être au choix, côté transmission, accouplée ou désaccouplée de sa transmission principale.

14. Andaineur rotatif (1) selon la revendication 12,
**caractérisé en ce que** toutes les transmissions (17,17',18,18',19,19') dérivées d'un engrenage conique (20,21,22) peuvent être au choix, côté transmission, accouplées ou désaccouplées de leur transmission principale.

15. Andaineur rotatif (1) selon la revendication 12,
**caractérisé en ce qu'**au moins une transmission (17, 17', 18, 18', 19, 19') d'un rotor d'andaineur (2,2',3,3',4,4') pouvant être accouplée ou désaccouplée peut être accouplée ou désaccouplée par commande à distance.

16. Andaineur rotatif (1) selon une ou plusieurs des revendications précédentes,
**caractérisé en ce que** les sens de rotation (23,23') des rotors d'andaineur (-2,2',3,3',4,4') d'au moins une rangée échelonnée (10,11,12) peuvent être, au choix et indépendamment des sens de rotation (23,23') des autres rangées échelonnées (10, 11, 12), inversés et donc modifiés.

17. Andaineur rotatif (1) selon une ou plusieurs des revendications précédentes,
**caractérisé en ce qu'**au moins les rotors d'andaineur (2,2',3,3',4,4') d'une rangée échelonnée (10, 11, 12) disposent d'une transmission hydrostatique.

18. Andaineur rotatif (1) selon la revendication 17,
**caractérisé en ce que** les rotors d'andaineur à transmission hydrostatique (2,2',3,3',4,4') peuvent être au choix accouplés ou désaccouplés coté transmission.

19. Andaineur rotatif (1) selon la revendication 17,
**caractérisé en ce que** les sens de rotation (23,23') au moins des rotors d'andaineur à transmission hydrostatique peuvent être, au choix et indépendamment des sens de rotation (23,23') des rotors d'andaineur des autres rangées échelonnées (10, 11, 12), inversés et par conséquent modifiés.

20. Andaineur rotatif (1) selon une ou plusieurs des revendications précédentes,
**caractérisé en ce que** chacun des rotors d'andaineur (2,2',3,3',4,4') peut être commandé séparément, être accouplé ou désaccouplé côté transmission ou voir son sens de rotation inversé.

21. Andaineur rotatif (1) selon une ou plusieurs des revendications précédentes,
**caractérisé en ce que** les rotors d'andaineur (2,2',3,3',4,4') peuvent être commandés en groupe dans la combinaison des rotors d'andaineur (2,3,4) ou (2',3', 4') séparément et être accouplés ou désaccouplés complètement côté transmission en tant que groupe.

22. Andaineur rotatif (1) selon une ou plusieurs des revendications précédentes,
**caractérisé en ce que** les sens de rotation (23,23') des rotors d'andaineur (2,2',3,3',4,4') sont associés les uns aux autres de façon à permettre la formation d'un grand andain (24) disposé de façon approximativement centrale par rapport au plan médian longitudinal (36).

23. Andaineur rotatif (1) selon une ou plusieurs des revendications précédentes,
**caractérisé en ce que** les sens de rotation (23,23') des rotors d'andaineur (2,2',3,3',4,4') sont associés les uns aux autres de façon à permettre la formation de trois andains simples (25) à distance les uns des autres.

24. Andaineur rotatif (1) selon une ou plusieurs des revendications précédentes,
**caractérisé en ce que** les rotors d'andaineur (2,3,4) ou (2',3',4') peuvent être basculés vers le haut de façon groupée à gauche ou à droite du plan médian longitudinal (36) et **en ce que** l'andaineur rotatif (1) peut être utilisé en tant qu'andaineur latéral déposant à droite ou à gauche afin de former un grand andain (24) approximativement dans la zone du plan médian longitudinal (36).

25. Andaineur rotatif (1) selon une ou plusieurs des revendications précédentes,
**caractérisé en ce qu'**en basculant vers le haut la première rangée échelonnée (10), il est possible de former un grand andain (24) en tant qu'andain central approximativement dans la zone du plan médian longitudinal (36).

26. Andaineur rotatif (1) selon une ou plusieurs des revendications précédentes,
**caractérisé en ce qu'**en basculant vers le haut la deuxième rangée échelonnée (11), il est possible de former un grand andain (24) en tant qu'andain central approximativement dans la zone du plan médian longitudinal (36).

27. Andaineur rotatif (1) selon une ou plusieurs des revendications précédentes,
**caractérisé en ce que** la possibilité de réglage de la longueur des bras avant (13, 13') permet de faire varier la largeur de travail (28,28').

28. Andaineur rotatif (1) selon une ou plusieurs des revendications précédentes,
**caractérisé en ce que** la possibilité de réglage de la longueur des bras du milieu (14,14') permet de faire varier la largeur de travail (28').

29. Andaineur rotatif (1) selon une ou plusieurs des revendications précédentes,
**caractérisé en ce que** la possibilité de réglage de la longueur des bras (13,13',14,14',15,15') permet de faire varier le recouvrement des rotors d'andaineur (2,3,4) (2',3',4') les uns en dessous des autres.

30. Andaineur rotatif (1) selon une ou plusieurs des revendications précédentes,
**caractérisé en ce qu'**en basculant vers le haut la troisième rangée échelonnée (11) il est possible de former un large andain (58) en tant qu'andain central approximativement dans la zone du plan médian longitudinal (36).

31. Andaineur rotatif (1) selon une ou plusieurs des revendications précédentes,
**caractérisé en ce qu'**en basculant vers le haut tous les bras (13,13',14, 14',15,15') des rangées échelonnées (10,11,12) et en rentrant les bras télescopiques (13,13',14,14') au moins des deux rangées échelonnées (10,11) on peut faire passer l'andaineur rotatif dans une position de transport.

32. Andaineur rotatif (1) selon une ou plusieurs des revendications précédentes,
**caractérisé en ce que** l'andaineur rotatif (1) est équipé d'un dispositif de détection d'obstacle (60,60').

33. Andaineur rotatif (1) selon une ou plusieurs des revendications précédentes,
**caractérisé en ce que** le dispositif de détection d'obstacle (60,60') peut être utilisé comme système de guidage intégré.

34. Andaineur rotatif (1) selon une ou plusieurs des revendications précédentes,
**caractérisé en ce que** les roues mobiles (9) du dispositif de déplacement (8) peuvent être dirigées indépendamment de la direction d'un tracteur (7) ou d'un véhicule moteur (37).

35. Andaineur rotatif (1) selon une ou plusieurs des revendications précédentes,
**caractérisé en ce qu'**au moins un mécanisme de commande des bras réglables en longueur est équipé d'un système de mesure de déplacement afin de déterminer la position instantanée d'un rotor d'andaineur (2,2',3,3',4,4') par rapport au plan médian longitudinal (36).
